# EUROPÄISCHE PATENTSCHRIFT

(11) **EP 0 448 734 B1**
(45) Veröffentlichungstag und Bekanntmachung des Hinweises auf die Patenterteilung: **14.12.1994**
(21) Anmeldenummer: 90105564.0
(22) Anmeldetag: 23.03.1990
(51) Int. Cl.: H04M 3/24

(54) **Schaltungsanordnung für die Routineprüfung einer Schnittstelle zwischen Anschlussgruppen und dem Koppelnetz eines PCM-Fernmeldevermittlungssystems**
Circuit arrangement for the routine testing of the interface between transmission groups and the switching network of a PCM telecommunications exchange
Disposition de circuit pour tester par routine l'interface entre les groupes de transmission et le réseau de commutation d'un central de télécommunication à MIC

(43) Veröffentlichungstag der Anmeldung: 02.10.1991
(73) Patentinhaber: SIEMENS AKTIENGESELLSCHAFT, 80333 München (DE)
(72) Erfinder: Nagler, Werner,Dipl.-Ing., D-8021 Schäftlarn (DE); Krumenacker, Rudolf, Dipl.-Ing., D-8000 München 21 (DE)

(56) Entgegenhaltungen:
- EP-A- 0 272 513
- WO-A-85/01410
- US-A- 4 071 704
- TELCOM REPORT. vol. 8, no. 5, September 1985, MUNCHEN DE Seiten 321 - 326; F.Hlawa: "Wartung von PCM Anschlüssen im System EWSD"

## Beschreibung

Die Erfindung betrifft eine Schaltungsanordnung gemäß dem Oberbegriff des Patentanspruchs.

Sie steht demnach mit einer Schaltungskonfiguration in Zusammenhang, bei der Anschlußgruppen für den Anschluß von Fernmeldeleitungen an die Vermittlungsstelle eines PCM-Fernmeldesystems paarweise in der Weise eine Einheit bilden, daß sie bei Ausfällen in ihrem Zentralbereich einander vertreten können.

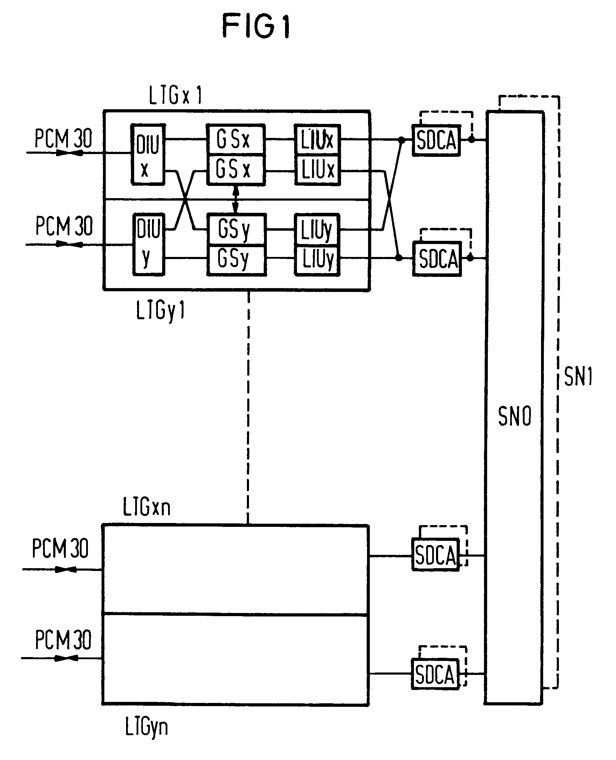

Eine derartige Konfiguration ist in FIG 1 angedeutet.

Wie die FIG 1 zeigt, bilden Anschlußgruppen LTG, an die im dargelegten Falle Verbindungsleitungen PCM30 angeschlossen sind, Paare von Anschlußgruppen LTGx1, LTGy1 bis LTGxn, LTGyn. Als wesentliche Bestandteile dieser Anschlußgruppen sind Schnittstellen DIUx, DIUy auf der Verbindungsleitungsseite sowie Schnittstelleneinheiten LIUx, LIUy zur Seite des Koppelnetzes SNO/SNl hin, und als zentrale Teile Gruppenkoppler GSx und GSy dargestellt. Die Gruppenkoppler und die Schnittstelleneinheiten LIU sind gedoppelt, wobei, wie die Figur zeigt, die eine Hälfte der Abwicklung des Fernmeldeverkehrs im Zusammenhang mit der an die betreffende Anschlußgruppe angeschlossenen Verbindungsleitung und die andere Hälfte mit der an die Partner-Anschlußgruppe angeschlossenen Verbindungsleitungen in Zusammenhang steht. Die steuerungsgemäßige Verbindung der Anschlußgruppen ist derart, daß im Normalbetrieb der Verkehr im Zusammenhang mit der an eine Anschlußgruppe angeschlossenen Verbindungsleitung über die eine Hälfte des Gruppenkopplers und der Schnittstellenschaltung LIU abgewickelt wird und in der anderen Hälfte des Gruppenkopplers Verbindungen, die die an die Partner-Anschlußgruppe angeschlossene Verbindungsleitung betreffen, vorbeugend aufgebaut, jedoch nicht durchgeschaltet sind. Erst bei einem Ausfall des Gruppenkopplers einer Anschlußgruppe oder der Schnittstelleneinheit LIU wird der betreffende Vermittlungsverkehr über die entsprechenden redundanten Teile GS und LIU der Partner-Anschlußgruppe abgewickelt.

Zu den Schnittstellen zwischen den Anschlußgruppen LTGx und LTGy gehören Schnittstellenschaltungen SDCA, die u.a. Umschalteeinrichtungen enthalten, die im erwähnten Ersatzschaltbild vom Koppelfeld SN kommende, für die Anschlußgruppe, der sie zugeordnet sind, bestimmte Fernmeldeinformationen statt an die Anschlußbaugruppe an die redundanten zentralen Teile der anderen Anschlußbaugruppe weiterleiten bzw. von den redundanten zentralen Teilen dieser anderen zentralen Anschlußbaugruppe kommende Fernmeldedaten den dieser anderen Anschlußbaugruppe zugeordneten Koppelfeldanschlüssen zuleiten.

Mit gestrichelten Linien ist angedeutet, daß zur Verbindung zwischen den Anschlußgruppen und der zweiten Hälfte SNl des gedoppelten Koppelfeldes SNO/SNl jeweils eine zweite solche Schnittstellenschaltung SDCA vorgesehen ist, für ein Paar von Anschlußgruppen, also insgesamt 4 Schnittstellenschaltungen.

Die Erfindung betrifft nun die Routineprüfung dieser Schnittstellen, also der Verbindungswege zu den genannten Schnittstellenschaltungen SDCA und der Schnittstellenschaltungen selbst.

Bisher wird in diesem Zusammenhang von den für die Übertragung zwischen den Anschlußgruppen und dem Koppelnetz zur Verfügung stehenden Zeitkanälen, bei einer konkreten Ausführungsform sind dies 128 Zeitkanäle, von der auf die Schnittstelle bezogen im Normalbetrieb aktiven Anschlußgruppe ein Prüfcodewort ausgesendet, in der Schnittstellenschaltung gespiegelt und zu der Anschlußgruppe zurückübertragen, wo ein Vergleich mit dem Muster des ausgesendeten Prüfwortes stattfindet. Es werden also die Verhältnisse während des einen Zeitkanals als stellvertretend für diejenigen während der übrigen Zeitkanäle gewertet. Die Teile der Schnittstelle, die mit der im Normalbetrieb passiven Anschlußgruppe in Zusammenhang stehen, sowie die Umschalteeinrichtung innerhalb der Schnittstellenschaltung SDCA werden bei diesem Vorgehen überhaupt nicht erfaßt. Eine derartige Prüfung mit Stichprobencharakter ist in US-A-4 071 704 beschrieben.

Dies ist insofern ungünstig, als im Falle der Notwendigkeit einer Umschaltung in den Ersatzschaltbetrieb nicht sicher ist, ob die betreffenden Schnittstellenteile bzw. die Umschalteeinrichtung ordnungsgemäß arbeiten können.

Obwohl bei der eingangs erwähnten Ersatzschalteprozedur weitgehend sichergestellt werden kann, daß Verbindungsverluste beim Umschalten gering bleiben, würde ein Umschalten nur zum Zwecke der Durchführung der Routineprüfung in der obengenannten Weise, da sie relativ häufig stattzufinden hätte, zu unzumutbaren Beeinträchtigungen führen. Im übrigen wird die bisherige Prüfung auch wegen des obenerwähnten Stichprobencharakters als nicht ausreichend angesehen.

Die Aufgabe der Erfindung besteht daher darin, eine Schaltungsanordnung für die Routineprüfung einer Schnittstelle der eingangs genannten Art anzugeben, die ohne Beeinträchtigung des laufenden Fernmeldeverkehrs auch die die augenblicklich passive Anschlußgruppe betreffenden Teile der Schnittstelle so vollständig und zuverlässig zu überwachen gestattet, daß im Augenblick der Vornahme einer Ersatzschaltung davon ausgegangen werden kann, daß diese Schnittstellenteile ordnungsgemäß arbeiten.

Die genannte Aufgabe wird durch die im Kennzeichen des Patentanspruchs angegebenen Mittel gelöst.

Aufgrund der erfindungsgemäßen Schaltungsanordnung ist es möglich, neben der wie bisher durchgeführten Stichprobenprüfung im Zusammenhang mit den die momentan aktive Anschlußgruppe betreffenden Schnittstellenteilen die die passive Anschlußgruppe betreffenden Schnittstellenteile vollständig, also während sämtlicher Zeitkanäle routinemäßig zu überwachen, ohne daß es zu irgendwelchen Beeinträchtigungen kommt.

Nachstehend wird die Erfindung unter Bezugnahme auf die Zeichnung näher erläutert.

In der Zeichnung zeigen:
FIG 1 das schon besprochene Konzept der redundanten Anschlußgruppen,
FIG 2 eine Schnittstellenschaltung SDCA zusammen mit den koppelfeldseitigen Schnittstelleneinheiten zweier ein Paar bildenden Anschlußgruppen.

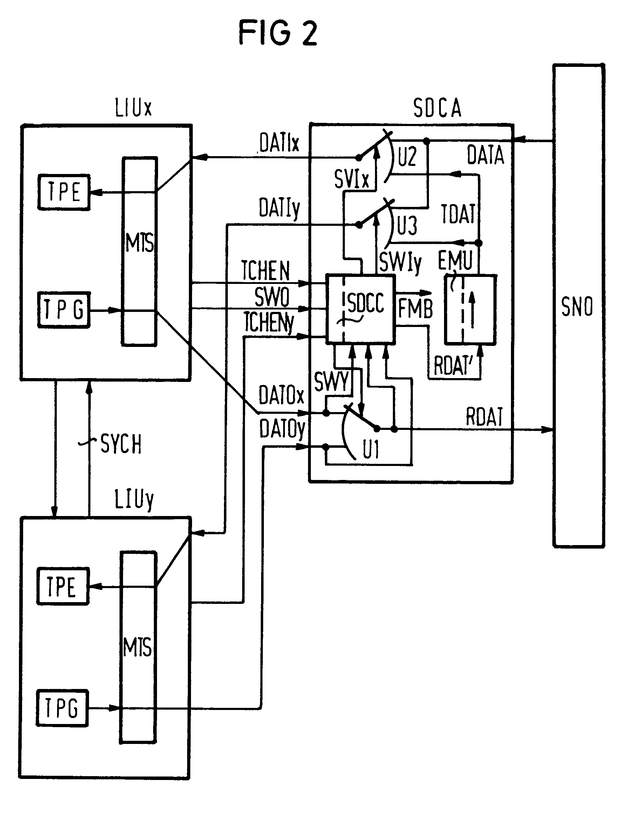

In der FIG 2 sind von einem Paar von Anschlußgruppen LTGx/LTGy, wie es in FIG 1 dargestellt ist, derjenige Teil der Baugruppe LIUx dargestellt, über den der Verkehr von und zum Koppelfeld SNO/SNl im Normalbetrieb abgewickelt wird, bzw. der zur Anschlußgruppe LTGy gehörende redundante Teil der Baugruppe LIUy, über den der die Anschlußgruppe LTGx bzw. die daran angeschlossenen Leitung PCM30 betreffende Verkehr im Ersatzschaltbetrieb abwickelbar ist.

Wesentliche Aufgaben dieser Baugruppe LIUx und LIUy sind die Durchschaltung bzw. vorbereitete Durchschaltung der Sprachkanäle, Koordination des Meldeverkehrs zwischen einer Gruppensteuerung der Anschlußgruppe und dem Koordinationsprozessor der Vermittlungsstelle, zu dem diese Anschlußgruppe gehört, sowie die Durchführung einer Reihe von Prüfungen, zu der auch die mit Hilfe der erfindungsgemäßen Schaltungsanordnung durchgeführte Routineprüfung gehört.

Im Zusammenhang mit der letztgenannten Prüfung stehen die hier als einzige Bestandteile dieser Baugruppe dargestellten Bestandteile, nämlich ein Prüfmustergenerator TPG, ein Prüfmusterempfänger TPE, sowie ein Zeitkanalschalter MTS, über den in erster Linie die Fernmeldeinformationen von und zu den Verbindungsleitungen geleitet werden und über den vom Mustergenerator gesendete Prüfmuster zeitkanalgerecht auf die Datenausgangsleitung DATOx gegeben bzw. von der Dateneingangsleitung DATIx ankommende Informationen, bei denen es sich dann um gespiegelte Prüfmuster handeln wird, an den Prüfmusterempfänger gegebenen werden können. Über die erwähnten Leitungen DATOx und DATIx werden auch die eigentlichen Fernmeldeinformationen zwischen der Anschlußgruppe und dem Koppelfeld übertragen.

Als Bestandteil der Schnittstelle zwischen Anschlußgruppen und dem Koppelfeld zeigt die Figur 2 die Schnittstellenschaltung SDCA, die gemäß der Darstellung in FIG 1 die obere der beiden ausgezogen dargestellten Schnittstellenschaltungen ist. Bei der in der Darstellung der FIG 1 unteren Schnittstellenschaltung SDCA sind Baugruppenteile LIUy und LIUx in entsprechender schaltungsmäßiger Vertauschung angeschlossen.

Die FIG 2 zeigt als Bestandteile der Schnittstellenschaltung SDCA einen Schreib-Lese-Speicher EMU, der eingangsseitig von einem Steuerbaustein SDCC von den Baugruppen LIUx und LIUy Informationen aufnehmen kann bzw. von dem aus diese Informationen in Realisierung einer Spiegelfunktion wieder an die genannten Baugruppen zurückübertragen werden können, wie nachstehend noch näher erläutert wird.

Die Schnittstellenschaltung SDCA enthält ferner eine aus den Teilen U1, U2 und U3 bestehende Umschalteeinrichtung.

Der erste Teil U1 der Umschalteeinrichtung dient dazu, wahlweise entweder auf der Datenleitung DATOx von der Baugruppe LIUx her kommende Daten oder auf der Datenleitung DATOy von der Baugruppe LIUy her kommende Daten an den Koppelfeldteil SNO des gedoppelten Koppelfeldes SNO/SNl weiterzuleiten.

Der zweite Teil U2 der Umschalteeinrichtung dient dazu, wahlweise auf der Datenseite DATA vom Koppelnetzteil SNO her kommende Daten oder aus dem genannten Schreib-Lese-Speicher EMU ausgelesene Informationen auf die Datenleitung DATIx zu schalten und damit an die Baugruppe LIUx weiterzuleiten.

Eine entsprechende Aufgabe bezüglich der Informationsweiterleitung zur Baugruppe LIUy hat der dritte Teil U3 der Umschalteeinrichtung, der demnach vom Koppelfeld her kommende Informationen oder aus dem Schreib-Lese-Speicher EMU ausgelesene Informationen auf die zur Baugruppe LIUy hin führende Datenleitung DATIy durchschaltet.

Sowohl der Schreib-Lese-Speicher EMU als auch die drei Teile U1 bis U3 der Umschalteeinrichtung stehen unter dem Steuereinfluß des Steuerbaustein SDCC und sind dabei zeitkanalgerecht und voneinander unabhängig ansteuerbar.

Nachstehend wird auf die Betriebsweise der erfindungsgemäßen Schaltungsanordnung näher eingegangen.

Im Normalbetrieb, d. h. dann, wenn die Anschlußgruppe, der die Baugruppe LIUx angehört, im aktiven Zustand ist, haben die Umschalter U1 und U2 während der Zeitkanäle K0 bis K127 die in der Figur dargestellte Schaltstellung, so daß in diesen Zeitkanälen von der Baugruppe LIUx auf der Datenleitung DATOx kommende Fernmeldeinformationen auf der Leitung RDAT an das Koppelfeld SNO weitergeleitet werden, bzw. vom Koppelfeld auf der Leitung DATA kommende Fernmeldeinformationen über die Datenleitung DATIx an die Baugruppe LIUx gelangen.

Während des Zeitkanals K127 sendet der Prüfmustergenerator TPG der Baugruppe LIUx ein Prüfwort, das über die Leitung DATOx an den Steuerbaustein SDCC gelangt und von dort an den Schreib-Lese-Speicher EMU weitergegeben wird. Nach einer Verzögerung von einem Pulsrahmen wird es von dort wieder ausgelesen und gelangt über den Teil U2 des Umschalters, der während eines Zeitkanals seine andere Schaltstellung einnimmt, und über die Datenleitung DATIx zurück an die Baugruppe LIUx, wo es durch den Zeitstufenschalter MTS zum Prüfmusterempfänger TPE vermittelt wird, durch den festgestellt wird, ob eine Übereinstimmung mit dem ausgesendeten Prüfmuster besteht oder nicht.

Es ist damit, wie vorstehend angedeutet, der die Anschlußgruppe LTGx, der die Baugruppe LIUx angehört, betreffende Teil der Schnittstelle stichprobenartig, nämlich bezüglich des Zeitkanals K127 überprüft.

In einem anderen Betriebsmodus können, während auf den Kanälen K0 bis K126 der Austausch von Fernmeldeinformationen zwischen der Baugruppe LIUx und dem Koppelfeld SNO erfolgt, auf sämtlichen Zeitkanälen K0 bis K127 die die Anschlußgruppe LTGy, der die Baugruppe LIUy angehört, betreffenden Teile der Schnittstelle überprüft werden. In diesem Falle sendet der Prüfmustergenerator TPG der Baugruppe LIUy während dieser Kanäle K0 bis K127 Prüfmuster, die über den Steuerbaustein SDCC an den Schreib-Lese-Speicher EMU gelangen und von dort über den Teil U3 des Umschalters, der hierzu die gegenüber der Darstellung in FIG 2 entgegengesetzte Schaltstellung einnimmt, und über die Datenleitung DATIy wieder zurück an die Baugruppe LIUy gelangen, wo eine Durchschaltung zum Prüfmusterempfänger TPE erfolgt.

In der FIG 2 ist angedeutet, daß auf den Datenleitungen DATOx und DATOy angelieferte Informationen sowohl direkt als auch bei entsprechender Schaltstellung des Umschalterteils U1 über diesen Umschalter an den Steuerbaustein SDCC gelangen können. In nichtdargestellter Weise kann durch diesen Steuerbaustein eine Auswahl der auf diesen Wegen an ihn gelangten Informationen bei der Weitergabe an den Schreib-Lese-Speicher EMU vorgenommen werden. Aus diesem Grunde und wegen der schon erwähnten zeitkanalweisen Ansteuerbarkeit der Umschalterteile U1 bis U2 ist es möglich, auch die Funktion der Umschalterteile und insbesondere des Umschalterteils U1 zu überprüfen.

Auch im Ersatzschaltbetrieb der Anschlußgruppen des Anschlußgruppenpaares sind mit Hilfe der erfindungsgemäßen Schaltungsanordnung Routineprüfungen möglich, was allerdings voraussetzt, daß die Baugruppe LIU der Anschlußgruppe, die ersatzgeschaltet worden ist nicht oder nicht mehr defekt ist, da sie ja die für eine solche Prüfung erforderlichen Einrichtungen TPE und TPG enthält. Eine solche Prüfung kommt vorzugsweise in Frage, bevor wieder vom Ersatzschaltbetrieb in den Normalbetrieb zurückgeschaltet werden soll.

Wie angegeben, handelt es sich bei der in FIG 2 dargestellten Schnittstellenschaltung LIUy um den redundanten Schnittstellenteil einer Anschlußgruppe LTGy, die mit der Anschlußgruppe LTGx, der die Schnittstellenschaltung LIUx angehört, ein Anschlußgruppenpaar bildet. In dem dem bisher beschriebenen Normalbetrieb gegenübergestellten Ersatzschaltbetrieb wird der Verkehr, der die an die Anschlußbaugruppe LTGx angeschlossene Übertragungsleitung PCM30 betrifft, über den redundanten Schnittstellenteil LIUy abgewickelt. In diesem Fall nimmt in einem ersten Betriebsmodus während der Zeitkanäle K1 bis K126 der Teil U1 der Umschalteeinrichtung eine Schaltstellung ein, in der eine Verbindung der Datenleitung DATOy mit der zum Koppelfeld führenden Datenleitung RDAT hergestellt wird. Der Teil U3 der Umschalteeinrichtung nimmt eine Schaltstellung ein, in der die vom Koppelfeld SNO herkommende Datenleitung DATA mit der zur Schnittstellenschaltung LIUy führenden Datenleitung DATIy verbunden ist.Im Zeitkanal K127 verbindet der Teil U3 der Umschalteeinrichtung den Ausgang des Schreib-Lese-Speichers EMU mit der Leitung DATIy, so daß eine Spiegelfunktion bezüglich eines in diesem Zeitkanal durch den Testmustergenerator TPG der Schnitstellenschaltung LIUy gesendeten Prüfworts realisiert wird.

In einem zweiten Betriebsmodus dieses Redundanzbetriebs nimmt der Teil U1 der Umschalteeinrichtung eine Schaltstellung ein, in der er eine Verbindung mit der Datenleitung DATOx herstellt, wogegen der Teil U2 des Umschalters eine Schaltstellung einnimmt, in der der Ausgang des Schreib-Lese-Speichers EMU mit der Datenleitung DATIx verbunden ist, so daß vom Prüfmustergenerator TPG der Schnittstellenschaltung LIUx gesendete Prüfmuster während dieser Zeitkanäle zu der Schnittstellenschaltung LIUx zurückgespiegelt werden können.

## Patentansprüche

1. Schaltungsanordnung für die Routineprüfung der jeweils eine Schnittstellenschaltung umfassenden Schnittstelle zwischen den Anschlußbaugruppen von Paaren von Anschlußbaugruppen für den Anschluß von Fernmeldeleitungen an die Vermittlungsstelle eines PCM-Vermittlungssystems und dem Koppelnetz des Vermittlungssystems,
wobei die Paare von Anschlußbaugruppen in der Weise eine Einheit bilden, daß bei Ausfall zentraler Teile einer der Anschlußbaugruppen in einem Ersatzschaltbetrieb der gesamte die an diese Anschlußbaugruppe angeschlossenen Fernmeldeleitungen betreffende Fernmeldeverkehr über redundante Teile der anderen Anschlußbaugruppe abwickelbar ist, wozu die Schnittstellenschaltungen Umschalteeinrichtungen enthalten, die im Ersatzschaltbetrieb vom Koppelfeld kommende für die Anschlußbaugruppe, der sie zugeordnet sind, bestimmte Fernmeldeinformationen statt an die Anschlußbaugruppe an die redundanten zentralen Teile der anderen Anschlußbaugruppe weiterleiten bzw. von den redundanten zentralen Teilen dieser Anschlaußbaugruppe kommende Fernmeldeinformationen, den dieser anderen Anschlußbaugruppe zugeordneten Koppelfeldanschlüssen zuleiten,
**dadurch** **gekennzeichnet,**
daß die Schnittstellenschaltung (SDCA) zusätzlich folgende Merkmale aufweist:
a) Es ist ein Schreib-Lese-Speicher (EMU) vorgesehen, der zeitkanalweise sowohl von der einen als auch von der anderen Anschlußbaugruppe (LTGx, LIUx; LTGy, LIUy) kommende Informationen aufnehmen kann, von dem aus diese nach einer Zeitverzögerung an die Anschlußbaugruppen anstelle von vom Koppelfeld (SN0/SN1) her kommenden Fernmeldeinformationen zurückübertragen werden können,
b) die Umschalteeinrichtung besteht außer einem ersten Teil (U1), der der Weiterleitung entweder von der Anschlußbaugruppe (LTGx, LIUx), der die Schnittstellenschaltung (SDCA) zugeordnet ist oder von der anderen Anschlußbaugruppe (LTGy, LIUy) kommenden Fernmeldeinformationen dient, sowie aus zwei weiteren Teilen (U2, U3), die jeweils einer anderen der beiden Anschlußbaugruppen zugeordnet sind und je nach Schaltstellung der Weiterleitung von vom Koppelfeld (SN0/SN1) kommenden Fernmeldeinformationen oder von aus dem Schreib-Lese-Speicher (EMU) ausgelesenen Informationen jeweils an die zugeordnete Anschlußbaugruppe dienen,
c) es ist eine Steuerung (SDCC) vorgesehen, die jeweils gesonderte Steuersignale für die einzelnen Teile der Umschalteeinrichtung (U1, U2, U3), sowie für den Betrieb des Schreib-Lese-Speichers (EMU) liefert.

## Claims

1. Circuit arrangement for the routine testing of the interface, comprising an interface circuit in each case, between the line/trunk modules of pairs of line/trunk modules for the connection of telecommunication lines to the exchange of a PCM switching system and the switching network of the switching system, in which the pairs of line/trunk modules form a unit in such a way that if central parts of one of the line/trunk modules fail, in a standby mode the entire telecommunication traffic for the telecommunication lines connected to said line/trunk module can be handled by redundant parts of the other line/trunk module, for which purpose the interface circuits contain switchover devices which in the standby mode forward telecommunication information coming from the switching matrix and destined for the line/trunk module to which they are assigned, instead of to the line/trunk module, to the redundant central parts of the other line/trunk module, or, respectively, supply telecommunication information coming from the redundant central parts of said line/trunk module to the switching matrix connections assigned to said other line/trunk module, characterized in that the interface circuit (SDCA) has the following additional features:
a) a read-write memory (EMU) is provided, which can store on a time channel basis information coming from both the one and the other line/trunk module (LTGx, LIUx; LTGy, LIUy), from which it is possible, after a time delay, to transmit said information back to the line/trunk modules instead of telecommunication information coming from the switching matrix (SN0/SN1),
b) the switchover device comprises, in addition to a first part (U1) which is assigned to the forwarding of telecommunication information coming either from the line/trunk module (LTGx, LIUx) assigned to the interface circuit (SDCA) or from the other line/trunk module (LTGy, LIUy), also two further parts (U2, U3) which are assigned to a respective one of the two line/trunk modules in each case and serve, depending on the switch position in each case, to forward telecommunication information coming from the switching matrix (SN0/SN1) or information read out of the read-write memory (EMU) to the assigned line/trunk module in each case,
c) a controller (SDCC) is provided which supplies in each case separate control signals for the individual parts of the switchover device (U1, U2, U3), and also for the operation of the read-write memory (EMU).

## Revendications

1. Montage pour le contrôle par routine de l'interface, comprenant un circuit d'interface, entre le réseau de connexion d'un système de commutation MIC et les groupes de raccordement de paires de groupes de raccordement pour le raccordement de lignes de télécommunication au central du système de commutation,
les paires de groupes de raccordement formant une unité, de telle manière qu'en cas de panne de parties centrales de l'un des groupes de raccordement lors d'un fonctionnement en remplacement, tout le trafic de télécommunication concernant les lignes de télécommunication reliées à ce groupe de raccordement peut s'écouler par des parties redondantes de l'autre groupe de raccordement, les circuits d'interface comprenant à cet effet des dispositifs commutateurs, qui, en fonctionnement de remplacement, retransmettent des informations de télécommunication déterminées, qui proviennent du réseau de connexion et sont destinées au groupe de raccordement, auquel elles sont associées, non pas au groupe de raccordement, mais aux parties centrales redondantes de l'autre groupe de raccordement, ou envoient des informations de télécommunication provenant des parties centrales redondantes de ce groupe de raccordement aux raccordements du réseau de connexion associés à cet autre groupe de raccordement,
caractérisé en ce que
le circuit (SDCA) d'interface a en outre les caractéristiques suivantes:
a) il est prévu une mémoire (EMU) d'écriture-lecture, qui peut enregistrer par canal temporel des informations provenant aussi bien de l'un que de l'autre groupe (LTGx, LIUx; LTGy, LIUy) de raccordement, et à partir de laquelle ces informations peuvent être transmises en retour après un retard aux groupes de raccordement, au lieu des informations de télécommunication provenant du réseau (SN0/SN1) de connexion,
b) le dispositif commutateur comporte, outre une première partie (U1), qui sert à retransmettre des informations de télécommunication provenant soit du groupe (LTGx, LIUx) de raccordement, auquel est associé le circuit (SDCA) d'interface, soit de l'autre groupe (LTGy, LIUy) de raccordement, deux autres parties (U2, U3), qui sont associées respectivement à un autre des deux groupes de raccordement et qui servent, suivant l'état de commutation, à retransmettre des informations de télécommunication provenant du réseau (SN0/SN1) de connexion ou des informations extraites de la mémoire (EMU) d'écriture-lecture au groupe associé de raccordement,
c) il est prévu une commande (SDCC), qui fournit des signaux spéciaux de commande pour les différentes parties du dispositif (U1, U2, U3) commutateur ainsi que pour le fonctionnement de la mémoire (EMU) d'écriture-lecture.
